# DEMANDE DE BREVET EUROPEEN

(11) **EP 1 962 010 A1**
(43) Date de publication de la demande: **27.08.2008**
(21) Numéro de dépôt: 08101806.1
(22) Date de dépôt: 20.02.2008
(51) Int. Cl.: F16M 11/10

(54) **Support inclinable pour ecran**

(30) Priorité: 21.02.2007 FR 0753393
(71) Demandeur: Erard, 38230 Chavonoz (FR)
(72) Inventeur: Verriere, Eric, 69004, LYON (FR); Le Monnier, Fabien, 38300, BOURGOIN JALLIEU (FR)
(74) Mandataire: Tetaz, Franck Claude Edouard

(57) **Abrégé**

L'invention concerne un support pour écran, comportant au moins une embase (10) apte à être solidarisée sur une paroi et une platine (20) apte à recevoir ledit écran et articulée par rapport à ladite embase (10) de telle manière qu'elle pivote autour d'un axe d'inclinaison (13) sensiblement horizontal.

Le support est remarquable en ce qu'il comprend :
- un premier bras (31) solidaire de la platine (20)
- un deuxième bras (32) mobile en rotation autour dudit axe d'inclinaison (13), les premier et deuxième bras étant mobiles en rotation l'un par rapport à l'autre autour d'un axe (33) et formant un levier (30)
- un moyen élastique apte à écarter les deux bras (31) et (32)
- un organe (34) solidaire du premier bras (31) et apte à coopérer avec l'axe d'inclinaison (13) de sorte que, lorsque les premier et deuxième bras (31, 32) sont écartés, l'organe (34) est arc-bouté sur l'axe d'inclinaison (13) de manière à empêcher la rotation du levier (30) et que lorsque l'on rapproche lesdits bras (31, 32), l'organe (34) s'écarte de l'axe (13) de manière à permettre la rotation du levier (30) autour de l'axe d'inclinaison (13).

## Description

### DOMAINE DE L'INVENTION

La présente invention concerne un support inclinable pour un écran, destiné à être fixé sur une paroi.

### ARRIERE PLAN DE L'INVENTION

Les écrans plats du type LCD ou plasma sont de plus en plus utilisés dans l'habitat. En effet, pour des raisons de faible encombrement et du confort visuel qu'ils procurent à l'utilisateur, ces types d'écrans remplacent avantageusement les écrans cathodiques traditionnels.

Ces écrans peuvent être posés sur un meuble mais, en raison de leur faible épaisseur, ils peuvent également être fixés à un mur ou à un plafond au moyen d'un support approprié, ce qui permet d'éviter l'emploi d'un meuble spécifique et occasionne un gain de place.

Par ailleurs, il est utile de pouvoir orienter et incliner l'écran pour permettre une visualisation optimale adaptée aux conditions d'utilisation. En particulier, les écrans de petite taille, c'est-à-dire dont la diagonale est comprise entre 14" et 26", soit entre 38 et 66 cm, et qui présentent par ailleurs une masse comprise entre 10 et 25 kg, sont généralement utilisés dans une chambre ou une cuisine et sont, de ce fait, susceptibles d'être changés d'orientation fréquemment suivant le nombre de spectateurs et leur situation dans la pièce.

On connaît déjà des supports muraux pour écrans plats qui comprennent un mécanisme d'inclinaison et d'orientation de l'écran.

Ainsi, la Demanderesse est titulaire d'une demande de brevet FR2 872 873 qui décrit un support inclinable dont le bloquage en rotation est obtenu par la coopération de deux secteurs dentés, qui sont maintenus en contact au moyen de deux cylindres en caoutchouc. Pour déverrouiller le système denté, il est nécessaire de pincer l'écran pour tirer sur un bras de levier situé derrière l'écran afin de comprimer les deux cylindres en caoutchouc et de séparer les deux secteurs dentés. Or, cette cinématique n'est pas intuitive pour l'utilisateur, qui a tendance à simplement actionner le bras de levier en rotation. Une telle manoeuvre entraîne un endommagement des dents et une dégradation prématurée du dispositif. En raison du poids important de l'écran, il a alors été observé un décrochement et le positionnement de l'écran en butée basse du système, avec une inclinaison à -15° par rapport au plan horizontal. Par ailleurs, les patins en caoutchouc doivent être suffisamment rigides pour maintenir les secteurs dentés l'un contre l'autre, et il en résulte un effort de compression important pour déverrouiller le système.

### BREVE DESCRIPTION DE L'INVENTION

L'un des buts de l'invention est donc de remédier à tous ces inconvénients en proposant un support pour écran de visualisation plat dont le réglage de l'inclinaison est intuitif et nécessite un effort raisonnable. Un autre but de l'invention est de proposer un système robuste et supportant de nombreuses manipulations. Ainsi, le support conforme à l'invention est apte à supporter 3 manipulations de la tête par jour pendant 10 ans, c'est-à-dire 10 000 cycles.

Conformément à l'invention, il est proposé un support pour écran, comportant au moins une embase apte à être solidarisée sur une paroi et une platine apte à recevoir ledit écran et articulée par rapport à ladite embase de telle manière qu'elle pivote autour d'un axe d'inclinaison sensiblement horizontal, le support comprenant :
- un premier bras solidaire de la platine
- un deuxième bras mobile en rotation autour dudit axe d'inclinaison,
les premier et deuxième bras étant mobiles en rotation l'un par rapport à l'autre autour d'un axe et formant un levier
- un moyen élastique apte à écarter les deux bras
- un organe solidaire du premier bras et apte à coopérer avec l'axe d'inclinaison de sorte que, lorsque les premier et deuxième bras sont écartés, l'organe est arc-bouté sur l'axe d'inclinaison de manière à empêcher la rotation du levier et que lorsque l'on rapproche lesdits bras, l'organe s'écarte de l'axe d'inclinaison de manière à permettre la rotation du levier autour dudit axe d'inclinaison.

De manière particulièrement avantageuse, la partie de l'organe qui coopère avec l'axe d'inclinaison est une portion de cylindre.

Selon un mode particulier de réalisation, l'organe et l'axe sont excentriques.

La surface de l'organe et/ou la surface de l'axe d'inclinaison comportent avantageusement des reliefs de manière à augmenter l'adhérence desdites surfaces et/ou de manière à permettre la rotation du levier vers le haut sans rapprochement des premier et deuxième bras.

Selon d'autres caractéristiques de l'invention, prises séparément ou en combinaison :
- l'axe d'inclinaison a un diamètre compris entre 20 et 30 mm,
- la portion de cylindre de l'organe a un diamètre compris entre 10 et 50 mm,
- la longueur des bras à partir de l'axe est comprise entre 120 et 180 mm,
- l'écartement des bras à une distance de 3 mm à partir de l'axe est compris entre 0,5 et 5 mm.

Le support comprend avantageusement une poignée mobile en translation le long des bras du levier.

De manière avantageuse, l'embase est apte à pivoter autour d'un axe sensiblement vertical.

Selon un mode particulier de réalisation, l'embase est apte à être fixée sur un bras solidaire de la paroi.

Un autre objet de l'invention concerne un dispositif de fixation pour un écran, comprenant le support selon l'invention et un socle solidaire de la paroi, ledit support étant relié au socle par l'intermédiaire de l'embase.

De manière particulièrement avantageuse, ledit dispositif comprend, entre ledit socle et l'embase, au moins un bras de déport.

### BREVE DESCRIPTION DES DESSINS

D'autres avantages et caractéristiques ressortiront mieux de la description qui va suivre d'une variante d'exécution, donnée à titre d'exemple non limitatif, du support pour écran de visualisation conforme à l'invention en référence aux dessins annexés sur lesquels :
- la figure 1 est une vue éclatée du dispositif,
- la figure 2 est une vue en coupe du dispositif au repos,
- la figure 3 est une vue en coupe du dispositif en cours de maniement,

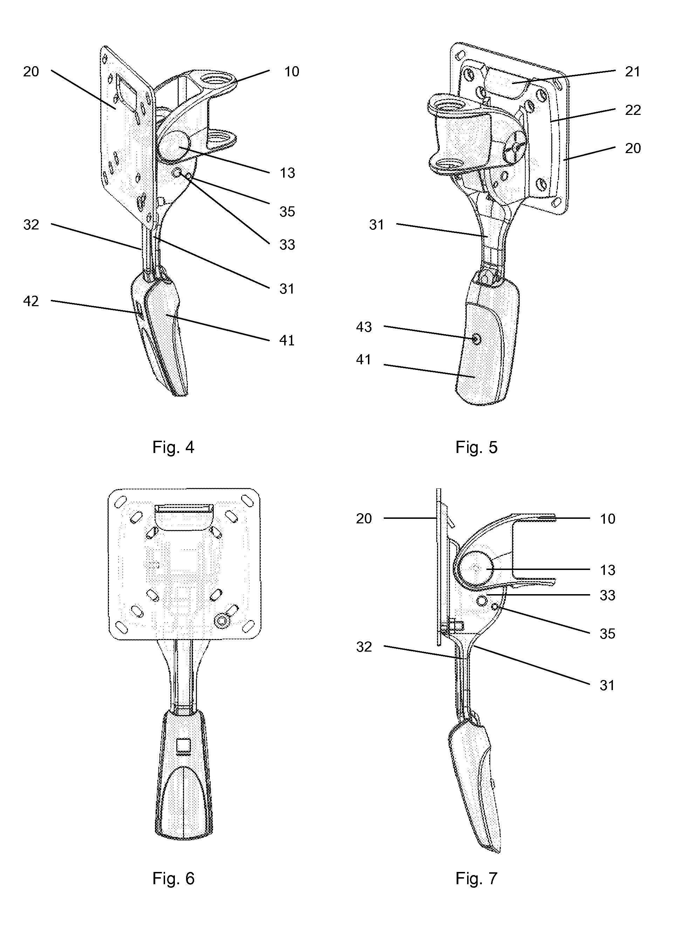

- les figures 4 à 7 sont des vues en perspective du dispositif selon l'invention.

### DESCRIPTION DETAILLEE DE L'INVENTION

On décrira, dans cet exemple non limitatif, un mode préféré de réalisation du support suivant l'invention.

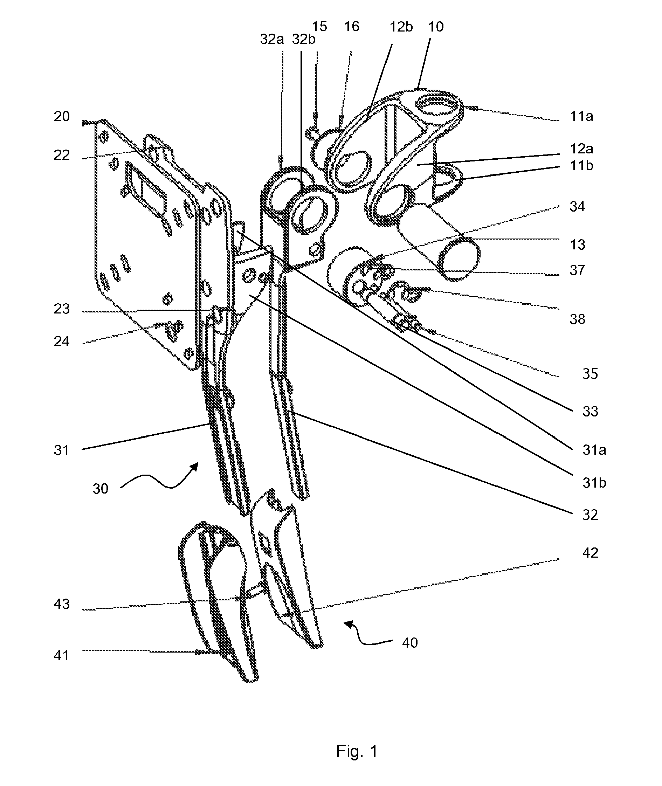

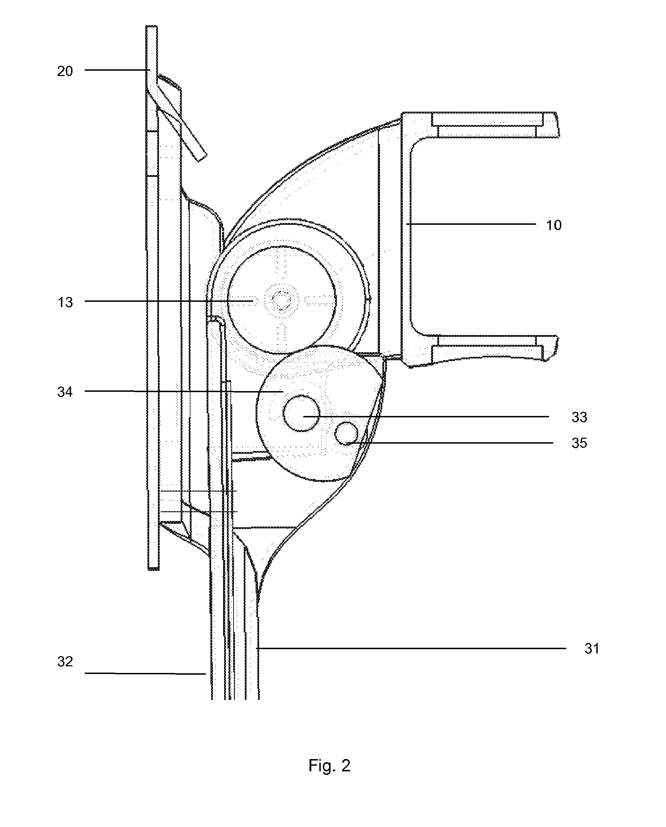

En référence aux figures 1 et 2, le support selon l'invention comporte une embase 10, apte à être fixée sur une paroi telle qu'un mur. L'embase 10 peut être fixée directement sur la paroi ou sur un socle fixé à la paroi par des moyens appropriés, tels qu'un ensemble de visserie permettant une fixation sécurisée tenant compte du poids de l'ensemble constitué par l'écran et le support, et de la nature de la paroi. Selon une variante d'exécution, un ou plusieurs bras de déport peuvent être intercalés entre l'embase 10 et le socle, de manière à pouvoir éloigner l'écran de la paroi.

Selon un mode préféré de réalisation, l'embase 10 est obtenue par injection d'aluminium. L'embase 10 présente deux pattes sensiblement horizontales 11 a, 11 b s'étendant vers la paroi et deux pattes sensiblement verticales 12a, 12b s'étendant vers l'écran. Les pattes 11 a, 11 b sont percées de façon à s'emboîter sur deux axes verticaux coaxiaux appartenant au socle ou au bras de déport (non représentés). De cette façon, le support selon l'invention est orientable autour d'un axe vertical au moyen de son embase 10.

Les deux pattes verticales 12a, 12b sont percées de manière à accueillir un axe 13 horizontal. Ledit axe 13 est rendu fixe par rapport à l'embase 10 grâce à un méplat 14 ménagé à l'une de ses extrémités en relation avec un méplat correspondant sur l'une des pattes 12b de l'embase 10. De manière préférée, le diamètre de l'axe 13 est compris entre 20 et 30 mm. L'axe est rendu imperdable par exemple au moyen d'un épaulement situé à son extrémité cylindrique, et, à son autre extrémité, par une vis 14 et une rondelle indémontable 15 plus large que le diamètre de l'axe 13.

Le support comporte, par ailleurs, une platine 20 qui se présente sous la forme d'une tôle métallique emboutie présentant des trous. De façon particulièrement avantageuse, la platine 20 est une platine universelle répondant à la norme VESA (Video Electronics Standards Association, marque déposée) qui régit la fixation des écrans. Ainsi, pour des écrans plats de taille comprise entre 14 et 23 pouces, la platine 20 se présente sous la forme d'un carré de 120 mm de côté, comportant des trous disposés aux coins de carrés de 50 mm, 75 mm et 100 mm de côté. La platine est alors fixée par des vis à l'arrière de l'écran à travers les trous appropriés.

Par ailleurs, dans sa partie supérieure, la platine 20 comporte une découpe emboutie formant une patte 21 saillante du côté de la face opposée à l'écran. Cette patte 21 est apte à être positionnée à cheval sur le bord supérieur d'une plaque support 22 de dimension sensiblement identique à celle de la platine 20. De façon avantageuse, une encoche de largeur légèrement supérieure à celle de la patte 21 est découpée dans la plaque support 22 de façon à positionner plus précisément la platine 20 par rapport à la plaque support 22. Enfin, un écrou 23 est vissé sur une tige filetée 24 saillante de la platine 20 à travers la plaque support 22, ce qui permet de fixer la platine 20 contre la plaque support 22 et ainsi de sécuriser la fixation de l'écran au support.

Un levier 30 destiné à manoeuvrer le dispositif est formé d'un premier bras 31 et d'un deuxième bras 32 sensiblement parallèles et s'étendant vers le bas dans une direction sensiblement perpendiculaire à l'axe 13.

Le premier bras 31 est solidaire de la plaque support 22 et de la platine 20. De façon avantageuse, le bras 31 et la plaque support 22 ne forment qu'une seule pièce qui est formée par injection d'aluminium. Selon un mode préféré de l'invention, le bras 31 présente en outre deux pattes 31 a, 31 b perpendiculaires à la plaque support et s'étendant du côté opposé à l'écran.

Le deuxième bras 32 est obtenu par injection d'aluminium. Il présente deux pattes perpendiculaires 32a, 32b formant un U. Les pattes 32a, 32b sont percées de façon à pouvoir accueillir l'axe 13. Le bras 32 est donc mobile en rotation autour de l'axe 13.

Le premier bras 31 et le deuxième bras 32 sont en outre mobiles en rotation l'un par rapport à l'autre autour d'un axe 33 qui passe à travers des trous percés à cet effet dans les pattes 31 a, 31 b, 32a et 32b.

De manière préférée, la longueur des bras 31 et 32 à partir de l'axe 33 est comprise entre 120 et 180 mm.

On notera que, lors de l'assemblage du dispositif, on glisse le deuxième bras 32 dans une ouverture ménagée à cet effet entre la plaque support 22 et le bras 31, de sorte que, lorsque le dispositif est assemblé et en situation d'utilisation, le bras 32 se trouve, du point de vue de l'utilisateur, devant le bras 31.

Un organe 34 est fixé entre les pattes 31 a, 31 b du bras 31. L'organe 34 est une pièce métallique ayant la forme d'un cylindre ou présentant au moins une portion de cylindre. De façon préférée, le diamètre dudit cylindre est compris entre 10 et 50 mm. L'organe 34 est disposé de manière excentrique par rapport à l'axe 33 et disposée par rapport au bras 32 de façon à ce que l'axe 13 interfère avec la trajectoire de rotation de l'organe 34 autour de l'axe 33. De manière préférée, la portion cylindrique de l'organe 34 et l'axe 13 se trouvent au contact l'une de l'autre lorsque les bras 31 et 32 sont écartés d'une distance comprise entre 0,5 et 5 mm, de préférence 0,5 mm, mesurée à une distance de 3 mm à partir de l'axe 33. Par ailleurs, l'organe 34 comporte un perçage longitudinal permettant le passage d'un axe 35 de fixation.

Selon un mode particulier de réalisation, les axes 33 et 35 comportent une rainure à chacune de leurs extrémités, et ils sont rendus indémontables après l'assemblage du dispositif au moyen de bagues d'arrêt 37 et 38.

Un moyen élastique est disposé entre les bras 31 et 32. Lorsqu'il est au repos, le moyen élastique a pour effet de maintenir les bras 31 et 32 écartés de façon à assurer le contact entre la portion cylindrique de l'organe 34 et l'axe d'inclinaison 13.

Selon un mode particulier de réalisation, ledit moyen élastique est un ressort disposé sensiblement à la moitié de la hauteur des bras 31 et 32. Un moyen de maintien du ressort est prévu sur chacun des deux bras, par exemple sous la forme de pions saillants sur lesquels sont emmanchées les extrémités du ressort. II va de soit que tout autre moyen élastique, telle qu'une butée en caoutchouc par exemple, peut être utilisé.

Comme on l'a vu, un phénomène d'arc-boutement a lieu entre la portion cylindrique de l'organe 34 et l'axe d'inclinaison 13, sous l'effet du poids de l'écran. De façon particulièrement avantageuse, la surface de l'organe 34 et/ou la surface de l'axe d'inclinaison 13 présentent des reliefs de manière à augmenter l'adhérence desdites surfaces et par conséquent la tenue de l'arc-boutement ; par ailleurs, ces reliefs permettent la rotation du levier vers le haut sans qu'il soit nécessaire de rapprocher les bras 31 et 32. Selon un mode particulier de réalisation, les reliefs sont des stries effectuées par un moletage, disposées parallèles à l'axe du cylindre ou bien hélicoïdales.

Enfin, on dispose à l'extrémité inférieure des bras 31 et 32 deux coques respectivement 41 et 42 formant une poignée 40, cette poignée étant destinée à faciliter la préhension des bras 31 et 32 et à améliorer l'esthétique du dispositif d'actionnement.

Les coques 41 et 42 sont moulées dans un matériau plastique usuel tel qu'un ABS ou un PP, puis sont éventuellement peintes pour s'harmoniser avec le style général du support selon l'invention.

De façon particulièrement avantageuse, les poignées 41 et 42 sont aptes à coulisser le long des bras 31 et 32, avec une amplitude d'environ 40 mm. Les coques 41, 42 présentent des formes complémentaires permettant un emboîtement de l'une dans l'autre de sorte qu'elles coulissent ensemble le long des bras 31, 32, tout en permettant le rapprochement des bras. Une vis 43 est adaptée pour fixer la coque 41 à l'arrière du bras 31, de sorte que cette vis 43 n'est pas visible lorsque le support est fixé à la paroi.

On va maintenant décrire l'installation et le maniement du support selon l'invention. L'embase 10 est fixée sur la paroi ou sur le socle avec les moyens appropriés décrits plus haut. L'écran plat ayant été fixé sur la platine 20 avec les moyens adaptés, puis la platine 20 ayant été solidarisée à la plaque support 22, l'utilisateur peut ajuster l'inclinaison de l'écran de la façon décrite ci-après.

En référence à la figure 2, au repos, l'organe 34 et l'axe d'inclinaison 13 sont arc-boutés de telle sorte que la rotation du support est impossible.

Les coques 41, 42 formant la poignée 40 sont disposées dans la position la plus basse possible sur les bras 31, 32, de façon à dépasser de l'écran et à être accessibles par l'utilisateur.

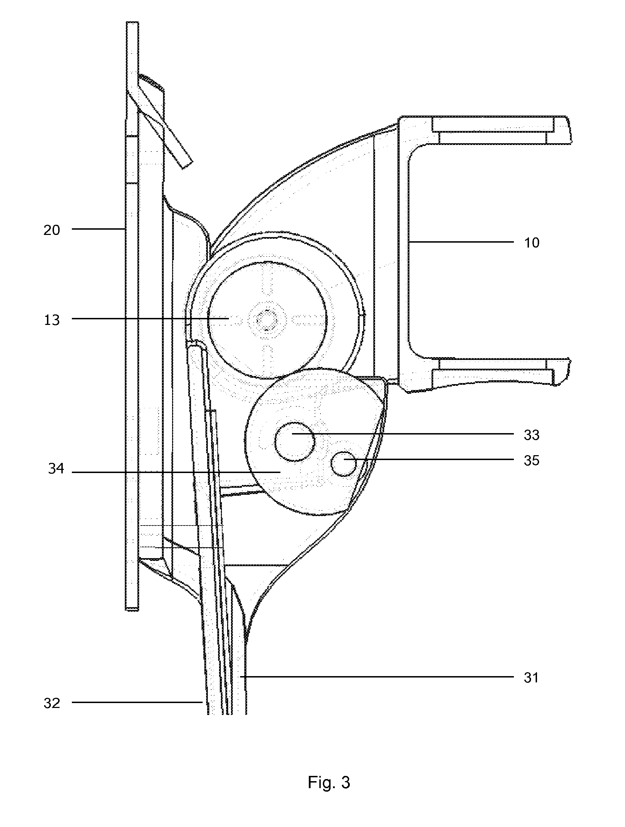

En référence à la figure 3, le pincement de la poignée 40 comprime le moyen élastique et rapproche les bras 31 et 32.

Ainsi, le bras 31, et l'organe 34 qui est solidaire dudit bras, effectuent une rotation autour de l'axe 33, dans le sens anti-horaire.

De cette façon, l'organe 34 et l'axe d'inclinaison 13 sont écartés l'un de l'autre.

Le pincement de la poignée 40 étant maintenu, la rotation du levier 30 autour de l'axe d'inclinaison 13 est alors possible. L'utilisateur peut donc régler l'inclinaison de l'écran comme il le souhaite. L'amplitude angulaire autorisée par le support selon l'invention est de +45° à -30° par rapport au plan horizontal.

Lors du relâchement du pincement de la poignée 40, le moyen élastique écarte les bras 31 et 32, ce qui a pour effet de ramener l'organe 34 au contact de l'axe d'inclinaison 13 et de bloquer le dispositif en rotation par arc-boutement.

Enfin, l'utilisateur peut masquer la poignée 40 derrière l'écran. Pour cela, il dévisse la vis 43 et fait coulisser les coques 41, 42 vers le haut respectivement le long des bras 31 et 32, puis, lorsqu'elles ont atteint la position voulue, il visse la vis 43 pour les maintenir dans cette position.

On a donc créé un dispositif dont le verrouillage par arc-boutement est plus sûr et moins susceptible d'être endommagé par une mauvaise manoeuvre que des secteurs crantés s'engageant l'un dans l'autre.

Par ailleurs, la cinématique consistant à pincer la poignée pour déverrouiller le système est beaucoup plus intuitive et nécessite un effort moins important.

Enfin, il va de soi que les exemples que l'on vient de donner ne sont que des illustrations particulières en aucun cas limitatives quant aux domaines d'application et aux modes d'exécution de l'invention.

## Revendications

1. - Support pour écran, comportant au moins une embase (10) apte à être solidarisée sur une paroi et une platine (20) apte à recevoir ledit écran et articulée par rapport à ladite embase (10) de telle manière qu'elle pivote autour d'un axe d'inclinaison (13) sensiblement horizontal,
**caractérisé en ce qu'**il comprend :
- un premier bras (31) solidaire de la platine (20)
- un deuxième bras (32) mobile en rotation autour dudit axe d'inclinaison (13), les premier et deuxième bras étant mobiles en rotation l'un par rapport à l'autre autour d'un axe (33) et formant un levier (30)
- un moyen élastique apte à écarter les deux bras (31) et (32)
- un organe (34) solidaire du premier bras (31) et apte à coopérer avec l'axe d'inclinaison (13) de sorte que, lorsque les premier et deuxième bras (31, 32) sont écartés, l'organe (34) est arc-bouté sur l'axe d'inclinaison (13) de manière à empêcher la rotation du levier (30) et que lorsque l'on rapproche lesdits bras (31, 32), l'organe (34) s'écarte de l'axe d'inclinaison (13) de manière à permettre la rotation du levier (30) autour dudit axe d'inclinaison (13).

2. - Support selon la revendication 1, **caractérisé en ce que** la partie de l'organe (34) qui coopère avec l'axe d'inclinaison (13) est une portion de cylindre.

3. - Support selon l'une des revendications 1 ou 2, **caractérisé en ce que** l'organe (34) et l'axe (33) sont excentriques.

4. - Support selon l'une des revendications 1 à 3, **caractérisé en ce que** la surface de l'organe (34) et/ou la surface de l'axe d'inclinaison (13) comportent des reliefs de manière à augmenter l'adhérence desdites surfaces.

5. - Support selon l'une des revendications 1 à 4, **caractérisé en ce que** la surface de l'organe (34) et/ou la surface de l'axe d'inclinaison (13) comportent des reliefs de manière à permettre la rotation du levier (30) vers le haut sans rapprochement des premier et deuxième bras (31, 32).

6. - Support selon l'une des revendications 1 à 5, **caractérisé en ce que** l'axe d'inclinaison (13) a un diamètre compris entre 20 et 30 mm.

7. - Support selon l'une des revendications 1 à 6, **caractérisé en ce que** la portion de cylindre de l'organe (34) a un diamètre compris entre 10 et 50 mm.

8. - Support selon l'une des revendications 1 à 7, **caractérisé en ce que** la longueur des bras (31) et (32) à partir de l'axe (33) est comprise entre 120 et 180 mm.

9. - Support selon l'une des revendications 1 à 8, **caractérisé en ce que** l'écartement des bras (31) et (32) à une distance de 3 mm à partir de l'axe (33) est compris entre 0,5 et 5 mm.

10. - Support selon l'une des revendications 1 à 9, **caractérisé en ce qu'**il comprend une poignée (40) mobile en translation le long des bras (31), (32) du levier (30).

11. - Support selon l'une des revendications 1 à 10, **caractérisé en ce que** l'embase (10) est apte à pivoter autour d'un axe sensiblement vertical.

12. - Support selon l'une des revendications 1 à 11, **caractérisé en ce que** l'embase (10) est apte à être fixée sur un bras solidaire de la paroi.

13. - Dispositif de fixation pour un écran, comprenant le support selon l'une des revendications 1 à 12 et un socle solidaire de la paroi, **caractérisé en ce que** ledit support est relié au socle par l'intermédiaire de l'embase (10).

14. - Dispositif selon la revendication 13, **caractérisé en ce qu'**il comprend, entre ledit socle et l'embase (10), au moins un bras de déport.

## Revendications modifiées

### Revendications modifiées conformément à la règle 137(2) CBE.

**1.** Support pour écran, comportant au moins une embase (10) apte à être solidarisée sur une paroi et une platine (20) apte à recevoir ledit écran et articulée par rapport à ladite embase (10) de telle manière qu'elle pivote autour d'un axe d'inclinaison (13) sensiblement horizontal, ledit support comprenant en outre:
- un premier bras (31) solidaire de la platine (20),
- un deuxième bras (32) mobile en rotation autour dudit axe d'inclinaison (13), les premier et deuxième bras étant mobiles en rotation l'un par rapport à l'autre autour d'un axe (33) et formant un levier (30),
- un moyen élastique apte à écarter les deux bras (31) et (32),
**caractérisé en ce qu'**il comprend un organe (34) solidaire du premier bras (31) et apte à coopérer avec l'axe d'inclinaison (13) de sorte que, lorsque les premier et deuxième bras (31, 32) sont écartés, l'organe (34) est arc-bouté sur l'axe d'inclinaison (13) de manière à empêcher la rotation du levier (30) et que lorsque l'on rapproche lesdits bras (31,32), l'organe (34) s'écarte de l'axe d'inclinaison (13) de manière à permettre la rotation du levier (30) autour dudit axe d'inclinaison (13).

**2.** Support selon la revendication 1, **caractérisé en ce que** la partie de l'organe (34) qui coopère avec l'axe d'inclinaison (13) est une portion de cylindre.

**3.** Support selon l'une des revendications 1 ou 2, **caractérisé en ce que** l'organe (34) et l'axe (33) sont excentriques.

**4.** Support selon l'une des revendications 1 à 3, **caractérisé en ce que** la surface de l'organe (34) et/ou la surface de l'axe d'inclinaison (13) comportent des reliefs de manière à augmenter l'adhérence desdites surfaces.

**5.** Support selon l'une des revendications 1 à 4, **caractérisé en ce que** la surface de l'organe (34) et/ou la surface de l'axe d'inclinaison (13) comportent des reliefs de
